# EUROPÄISCHE PATENTANMELDUNG

(11) **EP 4 530 570 A1**
(43) Veröffentlichungstag der Anmeldung: **02.04.2025**
(21) Anmeldenummer: 23200248.5
(22) Anmeldetag: 27.09.2023
(51) Int. Cl.: G01B 11/04, E05F 15/43, G01V 8/20, G01B 11/00

(54) **SYSTEM ZUR OBJEKTANALYSE BEIM TORDURCHGANG**

(71) Anmelder: Cedes AG, 7302 Landquart (CH)
(72) Erfinder: Kagerer, Bernd, 40213 Düsseldorf (DE)
(74) Vertreter: Otten, Roth, Dobler & Partner mbB Patentanwälte

(57) **Zusammenfassung**

System zur Analyse eines Objekts beim Durchgang durch ein geöffnetes Tor einer Gebäudeöffnung mit einem Lichtgitter und mit einer Auswerteeinrichtung. Das Lichtgitter weist eine Vielzahl von Einzellichtschranken zum Aussenden und Empfangen von Lichtstrahlen in unterschiedlichen und definierten Höhen und zur Detektion des Durchgangs eines Objekts durch das geöffnete Tor auf. Die Auswerteeinrichtung ist dazu ausgebildet, den Unterbrechungszustand der Einzellichtschranken auszuwerten und bei Unterbruch einer Einzellichtschranke ein Signal auszugeben. Weiterhin ist die Auswerteeinrichtung dazu ausgebildet, die Dauer der Änderungen der Unterbrechungszustände zu erfassen und auszuwerten und daraus zusammen mit den unterschiedlichen Höhen ein Muster des Objekts in Höhe und Länge zu erzeugen. Weiterhin weist die Auswerteeinrichtung einen Speicher auf, in welchem Referenzen hinterlegt sind für unterschiedliche Arten von Objekten. Weiterhin ist die Auswerteeinrichtung dazu ausgebildet, und durch Anwendung der Referenz auf das Muster die Art eines Objekts zu identifizieren.

## Beschreibung

Die Erfindung betrifft ein System zur Analyse eines Objekts beim Durchgang durch ein geöffnetes Tor einer Gebäudeöffnung.

Aus dem Stand der Technik sind Systeme mit Lichtgitter bekannt, welche die Anwesenheit und die Höhe eines Objekts detektieren.

Es ist Aufgabe der Erfindung, ein verbessertes System bereit zu stellen.

Diese Aufgabe wird, ausgehend von einem System eingangs genannter Art, durch einen System nach Anspruch 1 gelöst. Vorteilhafte Ausgestaltungen sind in den weiteren abhängigen Ansprüchen angegeben.

Das erfindungsgemäße System ist ein System zur Analyse eines Objekts beim Durchgang durch ein geöffnetes Tor einer Gebäudeöffnung mit einem Lichtgitter und mit einer Auswerteeinrichtung. Das Lichtgitter weist eine Vielzahl von Einzellichtschranken zum Aussenden und Empfangen von Lichtstrahlen in unterschiedlichen und definierten Höhen und zur Detektion des Durchgangs eines Objekts durch das geöffnete Tor auf. Die Auswerteeinrichtung ist dazu ausgebildet, den Unterbrechungszustand der Einzellichtschranken auszuwerten und bei Unterbruch einer Einzellichtschranke ein Signal auszugeben. Weiterhin ist die Auswerteeinrichtung dazu ausgebildet, die Dauer der Änderungen der Unterbrechungszustände zu erfassen und auszuwerten und daraus zusammen mit den unterschiedlichen Höhen ein Muster des Objekts in Höhe und Länge zu erzeugen. Weiterhin weist die Auswerteeinrichtung einen Speicher auf, in welchem Referenzen hinterlegt sind für unterschiedliche Arten von Objekten. Weiterhin ist die Auswerteeinrichtung dazu ausgebildet, und durch Anwendung der Referenz auf das Muster die Art eines Objekts zu identifizieren.

Das erfindungsgemässe System kann den Vorteil ausbilden, die Passage eines Objekts durch eine Gebäudeöffnung eindeutiger bestimmen oder kontrollieren zu können. Zudem ermöglicht das System eine Identifizierung und/oder eine Kontrollmaßnahme ohne Zeitverlust und ohne invasiv am Objekt zu arbeiten.

Vielzahl bedeutet mindestens 2, oder mindestens 5 oder mindestens 10 oder mindestens 20 oder mindestens 40. Je nach Ausbildung der Objekte können zur Identifikation mehr oder weniger Einzellichtschranken vorgesehen sein, da durch die Anzahl auch die Auflösung bedingt ist.

Das Muster kann ein Pixelmuster mit Pixeleinträge für die Unterbrüche der Lichtstrahlen oder eine Tabelle mit der Dauer der Unterbrüche und Nicht Unterbrüche pro Lichtstrahl sein. Das Pixelmuster kann in der Höhe den entsprechenden Lichtstrahlen und in der Länge dem Zeitverlauf zugeordnet sein.

Referenz kann eine Sammlung von Mustern oder Tabellen für verschiedene Arten von Objekten sein. Referenz kann ein System von künstlicher Intelligenz sein, welches mit einer solchen Sammlung trainiert wurde. Dadurch kann eine zuverlässige Erkennung in deutlich differenzierteren Situationen erfolgen.

Vorzugsweise ist die Auswerteeinrichtung dazu ausgebildet, im Speicher Referenzen zu speichern für typische Teilstücke mit bekannter waagrechter Länge von Arten, und durch Anwendung (Vergleich oder KI) der Referenz auf das Muster das typische Teilstück bekannter Länge zu identifizieren.

Dies kann den Vorteil ausbilden, dass die Identifizierung einzelner Objektarten zuverlässiger erfolgen kann.

Vorzugsweise ist die Auswerteeinrichtung dazu ausgebildet, aus der Länge des typischen Teilstücks im Muster und seiner bekannten Länge einen Skalierungsfaktor für die Länge des Musters zu ermitteln.

Der Skalierungsfaktor kann die reale Länge eines Pixels oder einer bestimmten Dauer des Unterbruchs angeben.

Dies kann den Vorteil ausbilden, dass die technische Umsetzung und die Anwendbarkeit deutlich breiter gefasst ist.

Vorzugsweise ist die Auswerteeinrichtung dazu ausgelegt, die Dauer des Unterbruchs eines Lichtstahls durch das typische Teilstück mit bekannter Länge zu ermitteln und aus der Dauer des Unterbruchs und der bekannten Länge die Geschwindigkeit des Objekts zu ermitteln und/oder auszugeben.

Dies kann die Abschätzung von Größenverhältnissen und Dimensionierungen ermöglichen.

Vorzugsweise ist die Auswerteeinrichtung dazu ausgelegt, ein Teilstück des Objekts auszuwählen die Dauer des Unterbruchs eines Lichtstahls durch ein Teilstück zu ermitteln und aus der Dauer des Unterbruchs und der Länge des Teilstücks im Muster und dem Skalierungsfaktor die Geschwindigkeit des Objekts zu ermitteln und/oder auszugeben.

Vorzugsweise ist die Auswerteeinrichtung dazu ausgelegt, im Speicher Referenzen zu speichern für Teilstücke von Arten welche einer Güterladung entsprechen und für typische Breiten der Güterladungen und durch Anwendung der Referenz auf das Muster das Teilstück welche einer Güterladung entspricht zu identifizieren und aus der Länge und Höhe der Güterladung im Muster und dem Skalierungsfaktor die Länge und die Höhe der Güterladung zu bestimmen und aus der Länge, Höhe und typischen Breite der Güterladung das Volumen der Güterladung zu ermitteln und/oder auszugeben.

Dies kann den Vorteil ausbilden, die Lagerkapazität einfach zu überwachen.

Vorzugsweise ist die Auswerteeinrichtung dazu ausgelegt, die Ausrichtung der Art des Objekts zu identifizieren und aus der Ausrichtung die Bewegungsrichtung des Objekts zu ermitteln und/oder auszugeben.

Dies kann den Vorteil ausbilden, die Lagerkapazität einfach zu überwachen.

Vorzugsweise weist das Lichtgitter mindestens 2, mindestens 5, mindestens 10, mindestens 20, oder mindestens 40 Einzellichtschranken auf. Vorzugsweise weist das Lichtgitter unterschiedliche Höhen für die Lichtstrahlen in Bezug auf den Boden oder das untere Ende der Leisten der Lichtschranken auf. Vorzugsweise weist das Lichtgitter unterschiedliche Höhen für die Lichtschranken in gleichem Abstand zueinander auf.

Dies kann eine Kostenoptimierung bzw. eine Optimierung der Auflösung ermöglichen, je nachdem, ob eine hohe Auflösung gewünscht ist.

Vorzugsweise ist der Unterbrechungszustand entweder ein Unterbruch oder kein Unterbruch des Empfangs der Lichtstrahlen der Einzellichtschranken.

Vorzugsweise ist die Auswerteeinrichtung dazu ausgelegt, das Signal an die Torsteuerung auszugeben, um eine Schliessbewegung des Tores zu stoppen.

Dies kann den Vorteil ausbilden, dass das erfindungsgemässe System als typische Lichtschranke zusätzlich zur Absicherung eines Tors verwendet werden kann.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Gebäudeöffnung, Tor, Lichtgitter, Objekt
- Fig. 2: Pixelbild einer Person mit Rolltisch und Paket
- Fig. 3: Pixelbild einer Person mit Hubwagen und Transportgut

### Detaillierte Beschreibung der Zeichnungen:

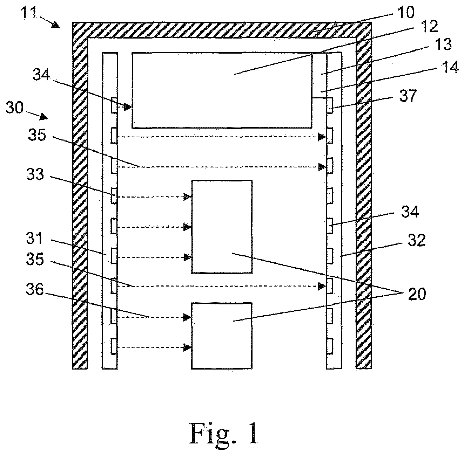

Fig. 1 zeigt ein erfindungsgemässes System zur Analyse eines Objekts 20 beim Durchgang durch ein geöffnetes Tor 11 einer Gebäudeöffnung 10 mit einem Lichtgitter 30. Das Tor 11 ist ein Rolltor oder ein Sektionaltor oder ein sonstiges Tor mit einem vertikal verschieblich beweglichen Torblatt 12 welches hier geöffnet ist. Das Tor 11 befindet sich in einer nicht dargestellten Wand mit einer Gebäudeöffnung 10. Das Tor umfasst eine Torsteuerung 14 und einen Torantrieb 13. Die Torsteuerung ist die Steuereinrichtung 14 des Tores, welche den Torantrieb und damit die Bewegung des Torblatts steuert.

Das Lichtgitter 30 ist in der Ebene des Torblatts 12 angeordnet. Das Lichtgitter 30 weist eine Senderleiste 31 und eine Empfängerleiste 32 sowie eine hier nicht dargestellten Auswerteeinrichtung auf. Die Senderleiste und die Empfängerleiste ist in der Ebene des Tors seitlich vom geschlossen gedachten Torblatt angeordnet. Die Senderleiste weist Senderelemente 33 und die Empfängerleiste weist Empfängerelemente 34 auf die einander in der Höhe zugeordnet sind und waagrechte Lichtschranken mit Lichtstahlen 35 ausbilden können. Die Lichtstrahlen bedecken im Wesentlichen den gesamte Öffnung des Tors.

Zwischen der Senderleiste und der Empfängerleiste befindet sich das Torblatt 12 und ein Objekt 20. Das Objekt 20 unterbricht einige Lichtstrahlen 36, sodass deren zugeordnete Empfängerelemente einen Unterbruch detektieren. Lichtstrahlen 35, welche hier oberhalb oder in einer Ausnehmung des Objekts verlaufen, sind nicht unterbrochen und die zugeordneten Empfängerelemente detektieren den Lichtstrahl und damit keinen Unterbruch.

Die Auswerteeinrichtung unterscheidet durch ein bekanntes Verfahren, ob ein Lichtstrahl durch das Torblatt oder durch ein Objekt unterbrochen ist. Vom Torblatt 12 abgeschattete Empfängerelemente 37 werden von der Auswerteeinrichtung ausgeblendet und nicht zur weiteren Analyse herangezogen. Beim Unterbruch eines Lichtstrahls durch ein Objekt sendet die Auswerteeinrichtung ein Signal an die Torsteuerung, welche aufgrund dieses Signals ein Schliessen des Tors verhindert oder ein sich schliessendes Tor stoppt und wieder öffnet.

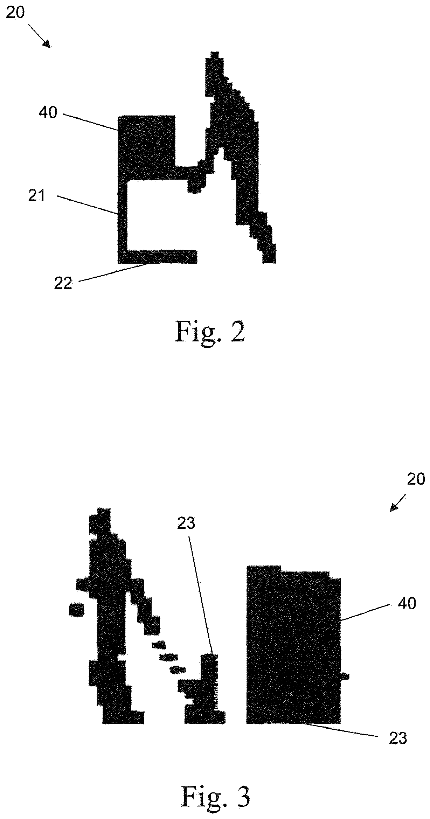

Fig. 2 und 3 zeigen Pixelbilder von einem durch das geöffnete Tor hindurchgehendem Objekt 20.

Beim Erkennen eines Objekts im Bereich des geöffneten Tors durch den ersten Unterbruch eines Lichtstahls startet die Auswerteeinrichtung einen Scan Modus für das Lichtgitter so lange bis kein Unterbruch mehr vorliegt. Dabei wird der Unterbrechungszustand aller Lichtstrahlen als Linienbild aufgenommen, dies mit einer Wiederholungsrate von 50 Millisekunden wiederholt und zu einem Pixelarray zusammengesetzt. Nicht unterbrochene Lichtstrahlen sind weiss abgebildet. Unterbrochene Lichtstahlen sind schwarz abgebildet. Pixel in gleicher Höhenlage im Bild entsprechen dem gleichen Lichtstrahl. Die Höhenlage der Pixel ist entsprechend der zunehmenden Höhe der Lichtstahlen angeordnet. Die Abfolge der Pixel in waagrechter Richtung entspricht den zeitlich aufeinanderfolgenden Linienbildern.

In der Auswerteeinrichtung ist eine Referenz hinterlegt, welche eine bestimmte Art von Objekten identifizieren kann. Unter anderem einen bekannten Rolltisch oder einen bekannten Hubwagen. Zudem ist der Auswerteeinrichtung hinterlegt, in welcher Höhenlage die jeweilige Art ein typisches Teilstück mit einer bekannten Länge aufweist. Zum Beispiel die Höhenlage und die Länge der unteren Ebene eines Rolltischs oder die Höhenlage und die Länge einer Europalette auf einem Hubwagen. Zudem ist der Auswerteeinrichtung hinterlegt, welche typische Tiefe ein typisches Transportgut der jeweiligen Art aufweist.

Die Referenz kann eine Bilddatenbank von Mustern sein oder ein System mit künstlicher Intelligenz sein, bei dem ein convolutionales neuronales Netzwerk mit jeweils mehreren unterschiedlichen Bildern der gleichen Art trainiert wird.

Länge ist die Länge in Bewegungsrichtung. Höhe ist die Höhe senkrecht zum Boden. Tiefe ist die Tiefe in Richtung der Lichtstrahlen.

Fig. 2 zeigt als Objekt 20 eine Person, welche einen Rolltisch 21 mit einem Paket als Transportgut 40 vor sich her durch das Tor schiebt. Die Auswerteeinrichtung identifiziert im Pixelbild über die Referenz den Rolltisch 21 und die untere Ebene des Rolltisches 22 mit seiner Höhenlage als typisches Teilstück.

Die Länge dieses typischen Teilstücks 22 ist in der Auswerteeinrichtung hinterlegt. Die Auswerteeinrichtung ermittelt nun den waagrechten Skalierungsfaktor für ein Pixel des Pixelbilds aus der Division der gespeichert hinterlegten Länge des typischen Teilstücks durch die Anzahl der Pixel, welche das typische Teilstück in waagrechter Richtung im Pixelbild aufweist.

Die Auswerteeinrichtung identifiziert nun weiter im Pixelbild mit der Referenz das Transportgut 40, welches mit dem Rolltisch 21 befördert wird. Mit Hilfe der Pixelausdehnung des Transportgutes im Pixelbild in waagrechter Richtung und dem Skalierungsfaktor berechnet die Auswerteeinrichtung die Länge des Transportgutes. Aufgrund der bekannten Höhenlage der Lichtstrahlen sind die realen Höhenabstände der Pixel bekannt. Mit Hilfe der Pixelausdehnung des Transportgutes im Pixelbild in senkrechter Richtung und den bekannten Höhenabständen der Pixel bestimmt die Auswerteeinrichtung die Höhe des Transportgutes. Mit der bestimmten Länge und Höhe des Transportguts und der hinterlegten typischen Breite des Transportgutes für diese Art, hier den Rolltisch, bestimmt die Auswerteeinrichtung das Volumen des Transportguts.

Die Auswerteeinrichtung bestimmt die Durchlaufdauer dieses typischen Teilstücks über die Anzahl der Pixel des typischen Teilstücks in waagrechter Richtung im Pixelbild, hier der unteren Ebene 22 des Rolltischs, multipliziert mit der Dauer des Pixeltakts. Aus der Durchlaufdauer und der bekannten Länge des typischen Teilstücks berechnet die Auswerteeinrichtung nun die Geschwindigkeit des Objekts.

Zudem bestimmt die Auswerteeinrichtung aufgrund des Pixelbilds und der Referenz die Bewegungsrichtung des Objekts.

Fig. 3 zeigt eine Person, welche Hubwagen mit einem Paket hinter sich her durch das Tor zieht. Die Auswerteeinrichtung identifiziert über die Referenz den Hubwagen und Europalette mit Ihrer Höhenlage als typisches Teilstück. Die Auswertung erfolgt analog zu Figur 2.

### Bezugszeichenliste:

- 10: Gebäudeöffnung
- 11: Tor
- 12: geöffnetes Torblatt
- 13: Torantrieb
- 14: Torsteuerung

- 20: Objekt
- 21: Rolltisch
- 22: Typische Länge für Rolltisch
- 23: Hubwagen
- 24: Typische Länge für Hubwagen

- 30: Lichtgitter
- 31: Senderleiste
- 32: Empfängerleiste
- 33: Sendeelement
- 34: Empfangselement
- 35: Lichtstrahl, nicht unterbrochen
- 36: Lichtstrahl, unterbrochen
- 37: Empfangselement ausgeblendet

- 40: Transportgut

## Patentansprüche

1. System
- zur Analyse eines Objekts beim Durchgang durch ein geöffnetes Tor einer Gebäudeöffnung
- mit einem Lichtgitter
- mit einer Vielzahl von Einzellichtschranken
- zum Aussenden und Empfangen von Lichtstrahlen
- in unterschiedlichen und definierten Höhen und
- zur Detektion des Durchgangs eines Objekts durch das geöffnete Tor
- mit einer Auswerteeinrichtung, welche dazu ausgebildet ist,
- den Unterbrechungszustand der Einzellichtschranken auszuwerten und
- bei Unterbruch einer Einzellichtschranke ein Signal auszugeben,
**dadurch gekennzeichnet, dass**
- die Auswerteeinrichtung dazu ausgebildet ist,
- die Dauer der Änderungen der Unterbrechungszustände zu erfassen und auszuwerten
- und daraus zusammen mit den unterschiedlichen Höhen ein Muster des Objekts in Höhe und Länge zu erzeugen
- in einem Speicher Referenzen zu speichern
- für unterschiedliche Arten von Objekten und
- und durch Anwendung der Referenz auf das Muster
- die Art eines Objekts zu identifizieren.

2. System nach Anspruch 1, **dadurch gekennzeichnet, dass**
- die Auswerteeinrichtung dazu ausgebildet ist,
- im Speicher Referenzen zu speichern
- für typische Teilstücke mit bekannter waagrechter Länge von Arten,
- und durch Anwendung der Referenz auf das Muster
- das typische Teilstück bekannter Länge zu identifizieren.

3. System nach Anspruch 2, **dadurch gekennzeichnet, dass**
- die Auswerteeinrichtung dazu ausgebildet ist,
- aus der Länge des typischen Teilstücks im Muster und seiner bekannten Länge einen Skalierungsfaktor für die Länge des Musters zu ermitteln.

4. System nach einem der Ansprüche 2 bis 3, **dadurch gekennzeichnet, dass**
- die Auswerteeinrichtung dazu ausgelegt ist,
- die Dauer des Unterbruchs eines Lichtstahls durch das typische Teilstück mit bekannter Länge zu ermitteln und
- aus der Dauer des Unterbruchs und der bekannten Länge die Geschwindigkeit des Objekts zu ermitteln und/oder auszugeben.

5. System nach einem der Ansprüche 3 bis 4, **dadurch gekennzeichnet, dass**
- die Auswerteeinrichtung dazu ausgelegt ist,
- ein Teilstück des Objekts auszuwählen
- die Dauer des Unterbruchs eines Lichtstahls durch ein Teilstück zu ermitteln und
- aus der Dauer des Unterbruchs und der Länge des Teilstücks im Muster und dem Skalierungsfaktor die Geschwindigkeit des Objekts zu ermitteln und/oder auszugeben.

6. System nach einem der Ansprüche 3 bis 5, **dadurch gekennzeichnet, dass**
- die Auswerteeinrichtung dazu ausgelegt ist,
- im Speicher Referenzen zu speichern
- für Teilstücke von Arten welche einer Güterladung entsprechen und
- für typische Breiten der Güterladungen
- und durch Anwendung der Referenz auf das Muster
- das Teilstück welche einer Güterladung entspricht zu identifizieren
- und aus der Länge und Höhe der Güterladung im Muster und dem Skalierungsfaktor die Länge und die Höhe der Güterladung zu bestimmen
- und aus der Länge, Höhe und typischen Breite der Güterladung das Volumen der Güterladung zu ermitteln und/oder auszugeben.

7. System nach einem der vorstehenden Ansprüche, **dadurch gekennzeichnet, dass**
- die Auswerteeinrichtung dazu ausgelegt ist,
- die Ausrichtung der Art des Objekts zu identifizieren und
- aus der Ausrichtung die Bewegungsrichtung des Objekts zu ermitteln und/oder auszugeben.

8. System nach einem der vorstehenden Ansprüche, **dadurch gekennzeichnet, dass**
- das Lichtgitter
- mindestens 2, mindestens 5, mindestens 10, mindestens 20, oder mindestens 40 Einzellichtschranken aufweist und/oder
- unterschiedliche Höhen für die Lichtstrahlen in Bezug auf den Boden oder das untere Ende der Leisten der Lichtschranken aufweist und/oder
- unterschiedliche Höhen für die Lichtstrahlen in gleichem Abstand zueinander aufweist.

9. System nach einem der vorstehenden Ansprüche, **dadurch gekennzeichnet, dass**
- der Unterbrechungszustand
- entweder ein Unterbruch oder kein Unterbruch des Empfangs der Lichtstrahlen der Einzellichtschranken ist.

10. System nach einem der vorstehenden Ansprüche, **dadurch gekennzeichnet, dass**
- die Auswerteeinrichtung dazu ausgelegt ist,
- das Signal
- an die Torsteuerung auszugeben,
- um eine Schliessbewegung des Tores zu stoppen.
